# EUROPÄISCHE PATENTSCHRIFT

(11) **EP 1 668 656 B1**
(45) Veröffentlichungstag und Bekanntmachung des Hinweises auf die Patenterteilung: **30.07.2008**
(21) Anmeldenummer: 04764402.6
(22) Anmeldetag: 24.08.2004
(51) Int. Cl.: H01F 38/14, H02J 5/00

(54) **ANORDNUNG ZUR BERÜHRUNGSLOSEN INDUKTIVEN BERTRAGUNG ELEKTRISCHER LEISTUNG**
ARRANGEMENT FOR CONTACTLESS INDUCTIVE TRANSMISSION OF ELECTRIC POWER
DISPOSITIF DE TRANSMISSION INDUCTIVE, SANS CONTACT, D'UNE PUISSANCE ELECTRIQUE

(30) Priorität: 22.09.2003 DE 10344144
(43) Veröffentlichungstag der Anmeldung: 14.06.2006
(73) Patentinhaber: SEW-EURODRIVE GMBH & CO., D-76646 Bruchsal (DE)
(72) Erfinder: PODBIELSKI, Leobald, 76199 Karlsruhe (DE); BECKER, Günter, 76684 Östringen (DE); SCHMIDT, Josef, 76676 Graben-Neudorf (DE)
(86) Internationale Anmeldenummer: PCT/EP2004/009422
(87) Internationale Veröffentlichungsnummer: WO 2005/036569

(56) Entgegenhaltungen:
- US-A- 5 528 113
- US-A- 5 831 841
- US-A- 6 089 512
- US-B1- 6 252 386

## Beschreibung

Die Erfindung betrifft eine Anordnung zur berührungslosen induktiven Übertragung elektrischer Leistung

Aus der DE 44 46 779 C2 ist eine Anordnung zur berührungslosen induktiven Übertragung elektrischer Leistung bekannt Dabei ist ein Mittelleiter etwa im Zentrum eines Außenleiters angeordnet und von diesem, als fast geschlossenes Gehäuse ausgebildeten Außenleiter teilweise umgeben Im Außenleiter fließt ein gleichgroßer Strom wie im Mittelleiter, der jedoch entgegengerichtet ist Der Mittelleiter ist umfasst von einem U-förmig ausgebildeten Ferritkern, der eine Sekundärwicklung trägt und elektromagnetisch, insbesondere magnetisch, an den Primärkreis, umfassend zumindest Mittelleiter und Außenleiter, gekoppelt ist Nachteilig ist bei dieser Anordnung, dass bei langen Strecken, beispielsweise mehrere Hundert Meter, zur Herstellung des Außenleiters viel Material notwendig ist. Dies führt zu hohen Kosten Des Weiteren führt der Außenleiter Strom und muss daher aus sicherheitstechnischen Gründen elektrisch isoliert werden.. Die Isolierung eines solchen Außenleiters ist aber mit sehr hohen Kosten verbunden

Aus der US 6 089 512 ist ebenfalls eine Anordnung zur berührungslosen induktiven Übertragung elektrischer Leistung bekannt, bei der ein U-förmiger Kern vorgesehen ist, um dessen Schenkel herum eine jeweilige Sekundärwicklung vorgesehen ist.

Aus der Figur 10 und Figur 12 der US 5 528 113 ist eine Anordnung zur berührungslosen induktiven Übertragung elektrischer Leistung bekannt, bei der die Achse der Sekundärwicklung parallel zu derjenigen Ebene ist, welche die dortigen Primärleiter 1312 und 1313 enthält.

Der Erfindung liegt daher die Aufgabe zugrunde, bei einer solchen Anordnung zur berührungslosen induktiven Übertragung elektrischer Leistung diese derart weiterzubilden, dass eine erhöhte Sicherheit bei geringen oder geringeren Kosten erreichbar ist und die Anordnung kompakt ausgeführt ist..

Erfindungsgemäß wird die Aufgabe bei der Anordnung zur berührungslosen induktiven Übertragung elektrischer Leistung nach den in Anspruch 1 angegebenen Merkmalen gelöst

Wesentliche Merkmale der Erfindung bei der Anordnung sind, dass die Anordnung zur berührungslosen induktiven Übertragung elektrischer Leistung auf einen bewegbaren Verbraucher mit einem als langgestreckte Leiteranordnung, insbesondere linear oder gekrümmt, ausgebildeten Primärkreis ausgeführt ist, der an eine Wechselspannungsquelle oder Wechselstromquelle angeschlossen ist,

und mit einem am relativ zum Primärkreis bewegbaren Verbraucher angebrachten Übertragerkopf, der einen Kern und eine diesen Kern umfassende Sekundärwicklung umfasst, welche mit dem Primärkreis elektromagnetisch, insbesondere magnetisch, gekoppelt ist,
wobei die Leiteranordnung des Primärkreises einen Hinleiter und einen Rückleiter umfasst, die in einer Halterung verbunden sind, wobei im Rückleiter ein gleichgroßer, entgegengesetzt gerichteter Strom, wie im Hinleiter fließt,
wobei die beiden Schenkel des U-förmigen Kerns aus E-förmigen Kernteilen ausgeführt sind, die jeweils mindestens eine Teilwicklung der Sekundärwicklung tragen,
wobei im Rückleiter ein gleichgroßer, entgegengesetzt gerichteter Strom, wie im Hinleiter fließt,
**wobei die jeweilige Teilwicklung um den mittleren jeweiligen Schenkel des E herum ausgeführt ist.**

Von Vorteil ist dabei, dass als Hin- und Rückleiter ein marktübliches kostengünstiges Kabel verwendbar, das für die sicherheitstechnischen Anforderungen isoliert ausführbar ist Es ist aber auch eine Litze, insbesondere HF-Litze, verwendbar, die aus vielen einzelnen isolierten Leitungen besteht und an der eine zusätzliche Isolierung vorsehbar ist Vorteiligerweise ist das Volumen effektiv genutzt und es besteht keine Abhängigkeit vom Halteprofil. Dies bewirkt, dass das Halteprofil nicht isoliert werden muss und gemäß der mechanischen Anforderungen ausführbar ist.
Der Kern ist im Großen U-förmig ausgebildet und bildet ein fast geschlossenes Gehäuse um Hin- und Rückleiter herum. Von Vorteil ist dabei, dass die induktive Kopplung verbesserbar ist und für den Rückleiter keine Litze notwendig ist. Die Schenkel des U sind jedoch E-förmig ausgeführt und somit zur Aufnahme von Wicklungen, insbesondere Teilwicklungen, vorsehbar. Von Vorteil ist eine Arbeitsfrequenz von 25 kHz. Es können aber auch Arbeitsfrequenzen aus dem Bereich von 15kHz bis 50kHz verwendet werden oder andere Frequenzen aus dem Mittelfrequenz

Bei einer vorteilhaften Ausgestaltung ist der Hin- und Rückleiter aus einem einfachen, marktüblichen isolierten Kabel ausgeführt. Von Vorteil ist dabei, dass die Anordnung kostengünstig ausführbar ist.

Wesentlicher weiterer Vorteil ist bei der Erfindung, dass ein sehr kompakter Aufbau ermöglicht ist und die Sicherheit erhöht ist, weil das Halteprofil keinen Strom führt Außerdem sind die Kosten gering, weil das Halteprofil nur den mechanischen Anforderungen entsprechend dimensioniert ist und keine Berücksichtigung elektrischer Anforderungen notwendig ist.

Bei einer vorteilhaften Ausgestaltung ist der Hin- und Rückleiter aus Litze, insbesondere HF-Litze, ausgeführt. Von Vorteil ist dabei, dass die ohmschen Verluste reduzierbar und der Wirkungsgrad verbesserbar ist.

Bei einer vorteilhaften Ausgestaltung sind Hin- und Rückleiter isoliert ausgeführt.. Von Vorteil ist dabei, dass die Sicherheit verbesserbar ist

Bei einer vorteilhaften Ausgestaltung besteht der Kern aus einem magnetisch leitfähigerem Material als Luft. Insbesondere ist er als Ferritkern ausführbar. Von Vorteil ist dabei, dass ein kostengünstiges Standardmaterial verwendbar ist, das eine größere magnetische Permeabilität als Luft aufweist und kleinere Ummagnetisierungsverluste aufweist.

Weitere Vorteile ergeben sich aus den Unteransprüchen.

Unter marktüblichem Kabel sind auch Kabel zu verstehen, die bei niederfrequenten Versorgungsnetzen in Industrie oder Haushalt eingesetzt werden, beispielsweise bei 50 Hz oder 60 Hz.

### Bezugszeichenliste

- 1: Ferritkern
- 2: Hinleiter und Rückleiter
- 3: Halterung
- 4: Sekundärwicklung
- 5: Halteprofil

Die Erfindung wird nun anhand von Abbildungen näher erläutert:

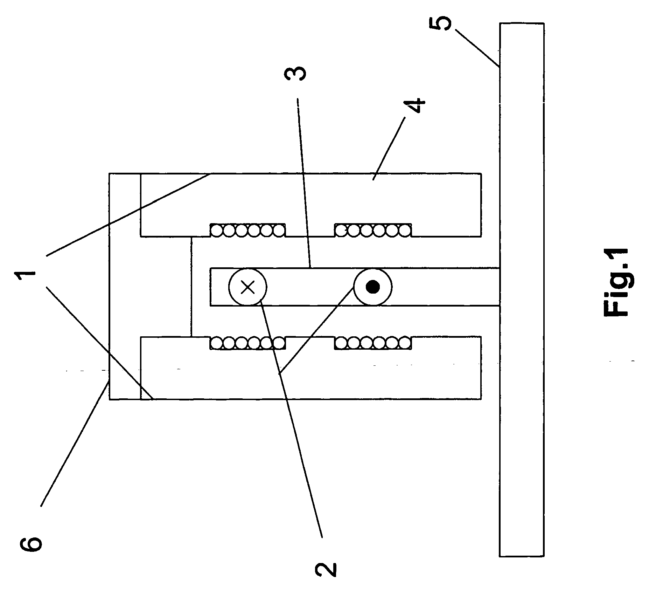

In der Figur 1 ist eine erfindungsgemäße Anordnung zur berührungslosen induktiven Übertragung elektrischer Leistung in Schnittansicht schematisch gezeichnet.

Dabei ist eine Wechselstromquelle mit einem Hinleiter 2 elektrisch verbunden zur Einspeisung eines mittelfrequenten Wechselstroms Die Rückleitung dieses Stromes erfolgt über den Rückleiter 2, der ebenfalls mit der Wechselstromquelle elektrisch verbunden ist

Hinleiter 2 und Rückleiter 2 sind in eine Halterung eingebunden, die auf einem Halteprofil montierbar ist

Der relativ zu diesem stationären Teil der Anordnung bewegliche Teil umfasst einen grob gesprochen U-förmigen Ferritkern 1, auf dem eine Sekundärwicklung 4 vorgesehen ist. Diese Sekundärwicklung 4 ist in Teilwicklungen ausgeführt, von denen eine erste auf der Innenseite des linken Schenkels des U und von denen die zweite auf der Innenseite des rechten Schenkels des U aufgebracht ist. Dazu sind die Schenkel jeweils E-förmig ausgeführt, wobei die Teilwicklung um den mittleren Schenkel des E vorgesehen sind

Die Sekundärwicklung versogt einen Verbraucher. Der Verbraucher und der Ferritkern sind zusammen gegen den Hinleiter und Rückleiter 2 relativ bewegbar angeordnet. Der Verbraucher ist beispielsweise auch mit einem Elektromotor verbindbar, der als Antrieb die Relativbewegung erzeugt.

Der Hinleiter und Rückleiter 2 sind in kostengünstiger Weise elektrisch isolierbar. Es kann dabei für beide Litze, insbesondere HF-Litze, verwendet werden. Die Litze besteht aus einer Vielzahl von einzeln isolierten Leitungen. Mit einer solchen Litze sind die ohmschen Verluste reduzierbar, insbesondere diejenigen, die von induzierten Wirbelströmen stammen

Die Teilwicklungen sind in Reihe schaltbar oder parallel schaltbar und stellen damit dann die Sekundärwicklung dar.

Bei der Erfindung wird somit das Volumen um den Linienleiter herum sehr effektiv genutzt. Gleichzeitig ist keine Abhängigkeit vom Halteprofil 5 gegeben.. Dies bedeutet, dass das Halteprofil an mechanische Anforderungen anpassbar ist und keine elektrischen Anforderungen erfüllen muss, insbesondere nicht isoliert werden muss.

Hin- und Rückleiter sind vorteiligerweise je nach Art der Halterung entweder als Rundlitze oder aus Flachlitze ausführbar. Insbesondere ist HF-Litze vorteilig verwendbar

## Patentansprüche

1. Anordnung zur berührungslosen induktiven Übertragung elektrischer Leistung auf einen bewegbaren Verbraucher
mit einem als langgestreckte Leiteranordnung, insbesondere linear oder gekrümmt, ausgebildeten Primärkreis, der an eine Wechselspannungsquelle oder Wechselstromquelle angeschlossen ist
und einem am relativ zum Primärkreis bewegbaren Verbraucher angebrachten Übertragerkopf, der einen Kern (1) und eine diesen Kern umfassende Sekundärwicklung (4) umfasst, welche mit dem Primärkreis elektromagnetisch, insbesondere magnetisch, gekoppelt ist,
**wobei**
die Leiteranordnung des Primärkreises einen Hinleiter (2) und einen Rückleiter umfasst, die in einer Halterung (3) verbunden sind, wobei im Rückleiter ein gleichgroßer, entgegengesetzt gerichteter Strom, wie im Hinleiter fließt,
**dadurch gekennzeichnet, dass**
die beiden Schenkel des U-förmigen Kerns aus E-förmigen Kernteilen ausgeführt sind, die jeweils mindestens eine Teilwicklung der Sekundärwicklung tragen,
wobei die jeweilige Teilwicklung um den mittleren jeweiligen Schenkel des E herum ausgeführt ist.

2. Anordnung nach mindestens einem der vorangegangenen Ansprüche,
**dadurch gekennzeichnet, dass**
die Teilwicklungen parallel oder in Reihe zusammengeschaltet sind zur Bildung der Sekundärwicklung.

3. Anordnung nach mindestens einem der vorangegangenen Ansprüche,
**dadurch gekennzeichnet, dass**
**der Hinleiter und Rückleiter aus einem isolierten Kabel ausgeführt sind.**

4. Anordnung nach mindestens einem der vorangegangenen Ansprüche,
**dadurch gekennzeichnet, dass**
der Hinleiter und Rückleiter aus Litze, insbesondere HF-Litze, ausgeführt sind

5. Anordnung nach mindestens einem der vorangegangenen Ansprüche,
**dadurch gekennzeichnet, dass**
Hinleiter und Rückleiter isoliert ausgeführt sind.

6. Anordnung nach mindestens einem der vorangegangenen Ansprüche,
**dadurch gekennzeichnet, dass**
der Kern aus einem magnetisch leitfähigem Material ausgeführt ist, insbesondere aus einem magnetisch leitfähigerem Material als Luft

7. Anordnung nach mindestens einem der vorangegangenen Ansprüche,
**dadurch gekennzeichnet, dass**
der Kern als Ferritkern ausgeführt ist

## Claims

1. An arrangement for contactless inductive electric power transfer to a mobile consumer,
said arrangement having a primary circuit which is in the form of an elongated conductor arrangement, in particular of a linear or curved design, and which is connected to an alternating voltage source or to an alternating current source,
and having a transformer head attached to the consumer, which is movable relative to the primary circuit, which transformer head comprises a core (1) and a secondary winding (4), which extends around said core and which is electromagnetically, in particular magnetically, coupled to the primary circuit,
wherein
the conductor arrangement of the primary circuit comprises a go conductor (2) and a return conductor which are connected in a support (3), the current in the return conductor being the same size as the current in the go conductor but flowing in the opposite direction thereto,
**characterised in that**
the two limbs of the U-shaped core are in the form of E-shaped core portions, each of which carries at least one part-winding of the secondary winding,
each part-winding being provided about the central limb of the E.

2. An arrangement according to at least one of the preceding claims,
**characterised in that**
the part-windings are interconnected in parallel or in series to form the secondary winding.

3. An arrangement according to at least one of the preceding claims,
**characterised in that**
the go conductor and return conductor are formed by an insulated cable.

4. An arrangement according to at least one of the preceding claims,
**characterised in that**
the go conductor and return conductor are formed by litz wire, in particular HF litz wire.

5. An arrangement according to at least one of the preceding claims,
**characterised in that**
the go conductor and return conductor are insulated.

6. An arrangement according to at least one of the preceding claims,
**characterised in that**
the core is made from a magnetically permeable material, in particular from a material that is magnetically more permeable than air.

7. An arrangement according to at least one of the preceding claims,
**characterised in that**
the core is in the form of a ferrite core.

## Revendications

1. Dispositif de transmission inductive sans contact d'une puissance électrique à un utilisateur mobile
avec un circuit primaire configuré, de manière linéaire ou courbe, comme un dispositif conducteur allongé, lequel circuit est raccordé à une source de tension alternative ou source de courant alternatif
et avec une tête de transformateur installée sur l'utilisateur mobile par rapport au circuit primaire, qui comprend un tore (1) et un circuit secondaire (4) entourant ce tore, ce circuit étant couplé électromagnétiquement, en particulier magnétiquement, au circuit primaire
le dispositif conducteur du circuit primaire comprenant un conducteur aller (2) et un conducteur retour, lesquels sont reliés dans une fixation (3), un courant de même importance dirigé en sens inverse passant dans le conducteur retour comme dans le conducteur aller,
**caractérisé en ce que** les deux branches du tore en forme de U sont réalisées à partir de parties du tore en forme de E, qui supportent respectivement au moins un enroulement partiel de l'enroulement secondaire,
chaque enroulement partiel étant réalisé autour de chaque branche centrale du E.

2. Dispositif selon la revendication 1,
**caractérisé en ce que**
les enroulements partiels sont connectés en parallèle ou en série pour la formation de l'enroulement secondaire.

3. Dispositif selon au moins l'une quelconque des revendications précédentes,
**caractérisé en ce que**
le conducteur aller et le conducteur retour sont réalisés à partir d'un câble isolé.

4. Dispositif selon au moins l'une quelconque des revendications précédentes,
**caractérisé en ce que**
le conducteur aller et le conducteur retour sont réalisés à partir d'un fil toronné, notamment d'un fil toronné HF.

5. Dispositif selon au moins l'une quelconque des revendications précédentes,
**caractérisé en ce que**
le conducteur aller et le conducteur retour sont isolés.

6. Dispositif selon au moins l'une quelconque des revendications précédentes,
**caractérisé en ce que**
le tore est réalisé à partir un matériau magnétiquement conducteur, notamment d'un matériau magnétiquement plus conducteur que l'air.

7. Dispositif selon au moins l'une quelconque des revendications précédentes,
**caractérisé en ce que**
le tore est réalisé comme un tore de ferrite.
